# EUROPEAN PATENT APPLICATION

(11) **EP 4 699 683 A1**
(43) Date of publication of application: **25.02.2026**
(21) Application number: 25188781.6
(22) Date of filing: 10.07.2025
(51) Int. Cl.: B01D 53/04

(54) **PACKAGE TYPE COMPRESSOR**

(30) Priority: 21.08.2024 JP 2024139737
(71) Applicant: Hitachi Industrial Equipment Systems Co., Ltd., Tokyo 101-0021 (JP)
(72) Inventor: KOIDE, Hiroaki, Tokyo, 100-8280 (JP); SUGIMASA, Masatoshi, Tokyo, 100-8280 (JP); OBATA, Takeshi, Tokyo, 101-0021 (JP); FUJIMOTO, Hideki, Tokyo, 101-0021 (JP); YABE, Toshiaki, Tokyo, 101-0021 (JP); ISHIZUKA, Yuki, Tokyo, 101-0021 (JP); NISHIMURA, Hitoshi, Tokyo, 101-0021 (JP); OSHIRO, Ryusuke, Tokyo, 101-0021 (JP)
(74) Representative: MERH-IP Matias Erny Reichl Hoffmann Patentanwälte PartG mbB

(57) **Abstract**

To provide a package type compressor capable of recovering carbon dioxide in the air while reducing pressure loss.

Provided is a package type compressor including: a compressor main body that compresses air; a cooler that cools, by heat exchange with air, compressed air discharged from the compressor main body; a housing that houses the compressor main body and the cooler; at least one first air inlet that is formed in the housing and takes in the air before being compressed by the compressor main body and the air before being used by the cooler; and a first air outlet that is formed in the housing and discharges air after being used by the cooler, in which at least one adsorption material for adsorbing carbon dioxide in the air, and at least one holding section for holding the adsorption material so as to be spaced apart outward with respect to at least one of the first air inlet and the first air outlet are provided.

## Description

### BACKGROUND OF THE INVENTION

### 1. Field of the Invention

The present invention relates to a package type compressor.

### 2. Description of the Related Art

In recent years, technology for recovering carbon dioxide in the air has attracted attention as one of the measures against global warming. As a specific example, it has been proposed to provide an adsorption material that adsorbs carbon dioxide in the air for products such as vending machines (see JP-2024-022437-A and the like).

A vending machine according to JP-2024-022437-A has an interior space that is formed inside a housing and stocks goods such as beverages, a first heat exchanger that is provided in the interior space and cools or heats air in the interior space by heat exchange with a refrigerant, a housing space that is formed inside the housing and below the interior space, and a refrigerant compressor, a second heat exchanger, and a capillary tube that are housed in the housing space and configure a heat pump cycle in which the refrigerant used in the first heat exchanger circulates.

An air inlet is formed at the front of the housing, an air outlet is formed at the rear of the housing, and the air inlet and the air outlet communicate with the housing space. A flow of air is generated in such a manner that air is caused to flow into the housing space by the driving of a fan provided in the housing space from the outside of the housing through the air inlet and then is discharged to the outside of the housing through the air outlet.

The second heat exchanger condenses the refrigerant by heat exchange with the air flowing into the housing space. The capillary tube decompresses the refrigerant condensed by the second heat exchanger. The first heat exchanger cools the air in the interior space by heat exchange with the refrigerant decompressed by the capillary tube. Accordingly, the refrigerant evaporates. The refrigerant compressor pressurizes the refrigerant evaporated by the first heat exchanger and then supplies it to the second heat exchanger.

In order to utilize the flow of air described above, for example, the adsorption material is arranged outside the housing and at a position blocking the air inlet or the air outlet.

### SUMMARY OF THE INVENTION

In JP-2024-022437-A, since the air is caused to flow into the adsorption material by utilizing the flow of air described above, it is possible to recover carbon dioxide in the air while reducing electric power and cost as compared with a case where the air is caused to flow into the adsorption material by providing a dedicated fan. However, if the adsorption material is arranged outside the housing and at a position blocking the air inlet or the air outlet, pressure loss increases and the flow rate of air flowing into the housing decreases. Therefore, there is a possibility that the performance of the product is reduced.

The present invention has been made in view of the above matters, and one of the objects is to recover carbon dioxide in the air while reducing pressure loss.

In order to solve the above problems, the configuration described in claims is applied. The present invention includes a plurality of means for solving the above problems, and one example thereof is a package type compressor including: a compressor main body that compresses air; a cooler that cools, by heat exchange with air, compressed air discharged from the compressor main body; a housing that houses the compressor main body and the cooler; at least one first air inlet that is formed in the housing and takes in the air before being compressed by the compressor main body and the air before being used by the cooler; and a first air outlet that is formed in the housing and discharges air after being used by the cooler, in which at least one adsorption material for adsorbing carbon dioxide in the air, and/or at least one holding section for holding the adsorption material so as to be spaced apart outward with respect to at least one of the first air inlet and the first air outlet are provided.

According to the present invention, it is possible to recover carbon dioxide in the air while reducing pressure loss.

It should be noted that objects, configurations, and effects other than those described above will be clarified by the following description. Also the embodiments and parts thereof described below can be combined with each other as far as technically compatible.

### BRIEF DESCRIPTION OF THE DRAWINGS

FIG. 1 is a schematic diagram for depicting a configuration of a package type compressor in a first embodiment of the present invention;
FIG. 2 is a perspective view for depicting a structure of the package type compressor in the first embodiment of the present invention;
FIG. 3 is a schematic diagram for depicting a configuration of a package type compressor in a second embodiment of the present invention;
FIG. 4 is a schematic diagram for depicting a configuration of a package type compressor in a third embodiment of the present invention; and
FIG. 5 is a schematic diagram for depicting a configuration of a package type compressor in a fourth embodiment of the present invention.

### DESCRIPTION OF THE PREFERRED EMBODIMENTS

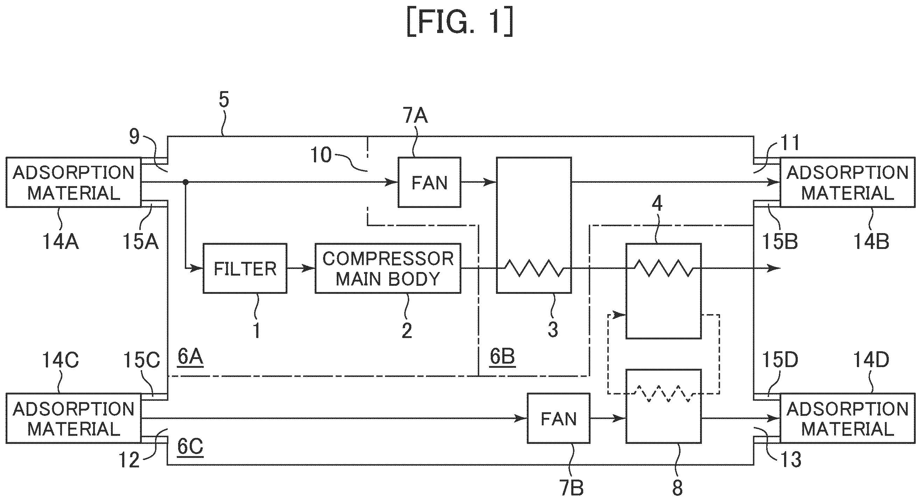

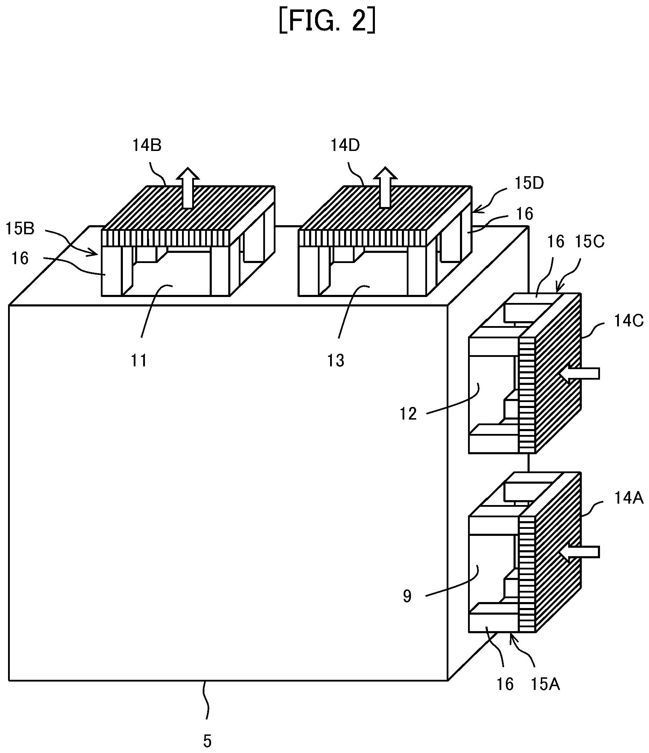

A first embodiment of the present invention will be described using FIG. 1 and FIG. 2. FIG. 1 is a schematic diagram for depicting a configuration of a package type compressor in the present embodiment. FIG. 2 is a perspective view for depicting a structure of the package type compressor in the present embodiment.

The compressor of the present embodiment is provided with a compressor main body 2 for sucking in and compressing air through a filter 1, a cooler 3 for cooling the compressed air discharged from the compressor main body 2, a dehumidifier 4 for further cooling and dehumidifying the compressed air cooled by the cooler 3, and a housing 5 for housing the above-described equipment.

The compressor main body 2 has, for example, a pair of male and female screw rotors engaged with each other, and a casing for accommodating the screw rotors, and a plurality of operating chambers are formed in tooth grooves of the screw rotors. Each operating chamber moves in the axial direction of the rotors as the rotors rotate, and sequentially performs a sucking process for sucking in air, a compression process for compressing the air, and a discharge process for discharging the compressed air.

Three machine chambers 6A, 6B, and 6C partitioned by, for example, partition plates are formed in the housing 5. The machine chamber 6A houses the filter 1 and the compressor main body 2. The machine chamber 6B houses the cooler 3 and a fan 7A. The machine chamber 6C houses the dehumidifier 4 and a fan 7B, together with a refrigerant compressor (not illustrated), a condenser 8, and a capillary tube (not illustrated) configuring a refrigeration cycle in which a refrigerant used in the dehumidifier 4 circulates.

An air inlet 9 is formed on the side surface of the housing 5, and communicates with the machine chamber 6A. An opening 10 is formed in the partition plate disposed between the machine chamber 6A and the machine chamber 6B, and the machine chamber 6A and the machine chamber 6B communicate with each other through the opening 10. An air outlet 11 is formed on the upper surface of the housing 5, and communicates with the machine chamber 6B. A flow of air is generated in such a manner that air is taken by the driving of the fan 7A into the machine chamber 6A from the outside of the housing 5 through the air inlet 9, then taken into the machine chamber 6B through the opening 10, and then discharged to the outside of the housing 5 through the air outlet 11.

The compressor main body 2 sucks in and compresses the air taken into the machine chamber 6A. The cooler 3 cools the compressed air discharged from the compressor main body 2, by heat exchange with the air taken into the machine chamber 6B.

An air inlet 12 is formed on the side surface of the housing 5, an air outlet 13 is formed on the upper surface of the housing 5, and the air inlet 12 and the air outlet 13 communicate with the machine chamber 6C. A flow of air is generated in such a manner that air is taken by the driving of the fan 7B into the machine chamber 6C from the outside of the housing 5 through the air inlet 12, and then discharged to the outside of the housing 5 through the air outlet 13.

The condenser 8 condenses the refrigerant by heat exchange with the air taken into the machine chamber 6C. The capillary tube decompresses the refrigerant condensed by the condenser 8. The dehumidifier 4 further cools and dehumidifies the compressed air cooled by the cooler 3, by heat exchange with the refrigerant decompressed by the capillary tube. Accordingly, the refrigerant evaporates. The refrigerant compressor pressurizes the refrigerant evaporated by the dehumidifier 4, and then supplies it to the condenser 8.

It should be noted that the air inlet 9 corresponds to a first air inlet that is formed in the housing 5 and takes in the air before being compressed by the compressor main body 2 and the air before being used by the cooler 3. The air outlet 11 corresponds to a first air outlet that is formed in the housing 5 and discharges the air after being used by the cooler 3. The air inlet 12 corresponds to a second air inlet that is formed in the housing 5 and takes in the air before being used by the condenser 8. The air outlet 13 corresponds to a second air outlet that is formed in the housing 5 and discharges the air after being used by the condenser 8.

The compressor of the present embodiment is provided with adsorption materials 14A, 14B, 14C, and 14D for adsorbing carbon dioxide in the air, a holding section 15A for holding the adsorption material 14A so as to be spaced apart outward with respect to the air inlet 9, a holding section 15B for holding the adsorption material 14B so as to be spaced apart outward with respect to the air outlet 11, a holding section 15C for holding the adsorption material 14C so as to be spaced apart outward with respect to the air inlet 12, and a holding section 15D for holding the adsorption material 14D so as to be spaced apart outward with respect to the air outlet 13.

The holding section 15A is configured with a plurality of rod-shaped members 16 arranged around the air inlet 9 so as to be spaced apart from each other as depicted in, for example, FIG. 2, or is integrally configured with the above-described plurality of rod-shaped members 16 through a frame member (not illustrated) in contact with the adsorption material 14A. The holding section 15B is configured with a plurality of rod-shaped members 16 arranged around the air outlet 11 so as to be spaced apart from each other as depicted in, for example, FIG. 2, or is integrally configured with the above-described plurality of rod-shaped members 16 through a frame member (not illustrated) in contact with the adsorption material 14B. The holding section 15C is configured with a plurality of rod-shaped members 16 arranged around the air inlet 12 so as to be spaced apart from each other as depicted in, for example, FIG. 2, or is integrally configured with the above-described plurality of rod-shaped members 16 through a frame member (not illustrated) in contact with the adsorption material 14C. The holding section 15D is configured with a plurality of rod-shaped members 16 arranged around the air outlet 13 so as to be spaced apart from each other as depicted in, for example, FIG. 2, or is integrally configured with the above-described plurality of rod-shaped members 16 through a frame member (not illustrated) in contact with the adsorption material 14D.

In the present embodiment, air is caused to flow into the adsorption material 14A by using a flow of air taken into the machine chamber 6A from the outside of the housing 5 through the air inlet 9, air is caused to flow into the adsorption material 14B by using a flow of air discharged from the machine chamber 6B to the outside of the housing 5 through the air outlet 11, air is caused to flow into the adsorption material 14C by using a flow of air taken into the machine chamber 6C from the outside of the housing 5 through the air inlet 12, and air is caused to flow into the adsorption material 14D by using a flow of air discharged from the machine chamber 6C to the outside of the housing 5 through the air outlet 13. Accordingly, it is possible to recover carbon dioxide in the air while reducing electric power and cost as compared with a case where air is caused to flow into the adsorption material by providing a dedicated fan.

In addition, in the present embodiment, since the adsorption materials 14A, 14B, 14C, and 14D are held so as to be spaced apart outward with respect to the air inlet 9, the air outlet 11, the air inlet 12, and the air outlet 13, respectively, it is possible to recover carbon dioxide in the air while reducing pressure loss as compared with a case where the adsorption materials 14A, 14B, 14C, and 14D are held so as to be close to the outside with respect to the air inlet 9, the air outlet 11, the air inlet 12, and the air outlet 13, respectively. As a result, a decrease in the flow rate of air taken into the housing 5 can be suppressed, and a deterioration in the performance of the compressor can be suppressed. In addition, the adsorption materials 14A, 14B, 14C, and 14D can be replaced without stopping the compressor.

The adsorption materials 14A, 14B, 14C, and 14D are configured with, for example, a carrier carrying an amine-based absorbent, a compound of calcium, or a compound of magnesium, and chemically adsorbs carbon dioxide in the air. Alternatively, the adsorption materials 14A, 14B, 14C, and 14D are configured with, for example, zeolite, activated carbon, or silica, and physically adsorbs carbon dioxide in the air. In the case where the adsorption materials are configured to chemically adsorb carbon dioxide in the air, the amount of adsorption of carbon dioxide can be increased by utilizing the heat of the air (that is, the air heated by the cooler 3 or the dehumidifier 4) discharged through the air outlet 11 or 13.

It should be noted that in the first embodiment, an example of a case where the adsorption materials and the holding sections are provided for all of the air inlets 9 and 12 and the air outlets 11 and 13 has been described, but the present invention is not limited to this, and the adsorption material and the holding section may be provided for at least one of the air inlets 9 and 12 and the air outlets 11 and 13.

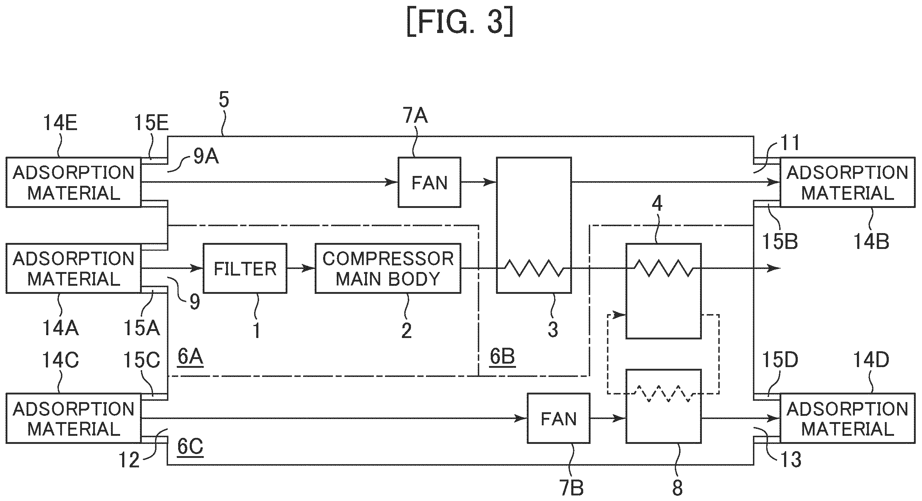

A second embodiment of the present invention will be described using FIG. 3. FIG. 3 is a schematic diagram for depicting a configuration of a package type compressor in the present embodiment. It should be noted that in the present embodiment, parts equivalent to those in the first embodiment are denoted by the same reference numerals, and descriptions thereof will be omitted as appropriate.

In the compressor of the present embodiment, the opening 10 is not formed in the partition plate disposed between the machine chamber 6A and the machine chamber 6B, and the machine chamber 6A and the machine chamber 6B do not communicate with each other. An air inlet 9A is formed in the housing 5, and communicates with the machine chamber 6B. A flow of air is generated in such a manner that air is taken by the driving of the fan 7A into the machine chamber 6B from the outside of the housing 5 through the air inlet 9A, and then discharged to the outside of the housing 5 through the air outlet 11. A flow of air is generated in such a manner that air is taken by the driving of the compressor main body 2 into the machine chamber 6A from the outside of the housing 5 through the air inlet 9.

It should be noted that the air inlets 9 and 9A correspond to the first air inlets that are formed in the housing 5 and take in the air before being compressed by the compressor main body 2 and the air before being used by the cooler 3.

The compressor of the present embodiment is provided with, in addition to the adsorption materials 14A to 14D and the holding sections 15A to 15D described above, an adsorption material 14E for adsorbing carbon dioxide in the air, and a holding section 15E for holding the adsorption material 14E so as to be spaced apart outward with respect to the air inlet 9A. The holding section 15E is configured with a plurality of rod-shaped members 16 arranged around the air inlet 9A so as to be spaced apart from each other, or is integrally configured with the above-described plurality of rod-shaped members 16 through a frame member in contact with the adsorption material.

In the present embodiment, air is caused to flow into the adsorption material 14A by using a flow of air taken into the machine chamber 6A from the outside of the housing 5 through the air inlet 9, air is caused to flow into the adsorption material 14E by using a flow of air taken into the machine chamber 6B from the outside of the housing 5 through the air inlet 9A, air is caused to flow into the adsorption material 14B by using a flow of air discharged from the machine chamber 6B to the outside of the housing 5 through the air outlet 11, air is caused to flow into the adsorption material 14C by using a flow of air taken into the machine chamber 6C from the outside of the housing 5 through the air inlet 12, and air is caused to flow into the adsorption material 14D by using a flow of air discharged from the machine chamber 6C to the outside of the housing 5 through the air outlet 13. Accordingly, it is possible to recover carbon dioxide in the air while reducing electric power and cost as compared with a case where air is caused to flow into the adsorption material by providing a dedicated fan.

In addition, in the present embodiment, since the adsorption materials 14A, 14B, 14C, 14D, and 14E are held so as to be spaced apart outward with respect to the air inlet 9, the air outlet 11, the air inlet 12, the air outlet 13, and the air inlet 9A, respectively, it is possible to recover carbon dioxide in the air while reducing pressure loss as compared with a case where the adsorption materials 14A, 14B, 14C, 14D, and 14E are held so as to be close to the outside with respect to the air inlet 9, the air outlet 11, the air inlet 12, the air outlet 13, and the air inlet 9A, respectively. As a result, a decrease in the flow rate of air taken into the housing 5 can be suppressed, and a deterioration in the performance of the compressor can be suppressed.

It should be noted that in the second embodiment, an example of a case where the adsorption materials and the holding sections are provided for all of the air inlets 9, 9A, and 12 and the air outlets 11 and 13 has been described, but the present invention is not limited to this, and the adsorption material and the holding section may be provided for at least one of the air inlets 9, 9A, and 12 and the air outlets 11 and 13.

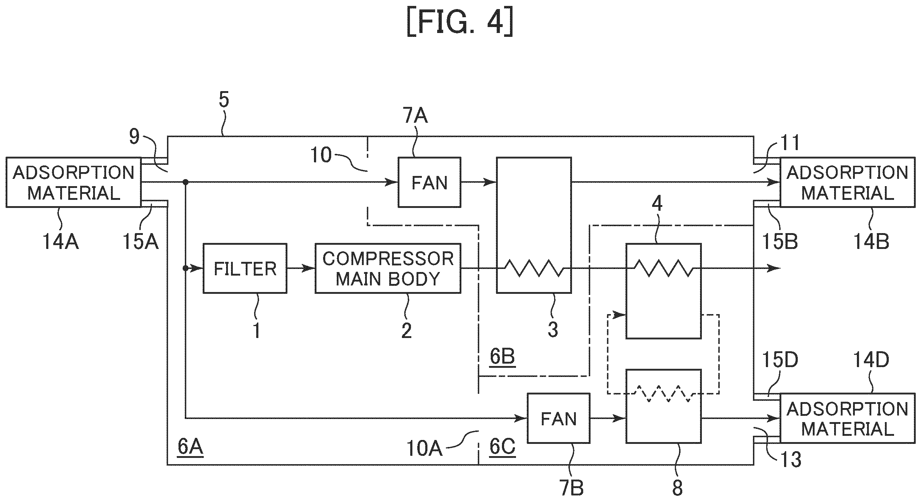

A third embodiment of the present invention will be described using FIG. 4. FIG. 4 is a schematic diagram for depicting a configuration of a package type compressor in the present embodiment. It should be noted that in the present embodiment, parts equivalent to those in the first embodiment are denoted by the same reference numerals, and descriptions thereof will be omitted as appropriate.

In the compressor of the present embodiment, the air inlet 9 is the first air inlet for taking in the air before being compressed by the compressor main body 2 and the air before being used by the cooler 3, and also serves as a second air inlet for taking in the air before being used by the condenser 8 (that is, the air inlet 12 is not formed in the housing 5). An opening 10A is formed in the partition plate disposed between the machine chamber 6A and the machine chamber 6C, and the machine chamber 6A and the machine chamber 6C communicate with each other through the opening 10A. A flow of air is generated in such a manner that air is taken by the driving of the fan 7B into the machine chamber 6A from the outside of the housing 5 through the air inlet 9, then taken into the machine chamber 6C through the opening 10A, and then discharged to the outside of the housing 5 through the air outlet 13.

The compressor of the present embodiment is not provided with the adsorption material 14C and the holding section 15C described above, but is provided with the adsorption materials 14A, 14B, and 14D and the holding sections 15A, 15B, and 15D described above. Therefore, effects similar to those of the first embodiment can be obtained.

It should be noted that in the third embodiment, an example of a case where the adsorption materials and the holding sections are provided for all of the air inlet 9 and the air outlets 11 and 13 has been described, but the present invention is not limited to this, and the adsorption material and the holding section may be provided for at least one of the air inlet 9 and the air outlets 11 and 13.

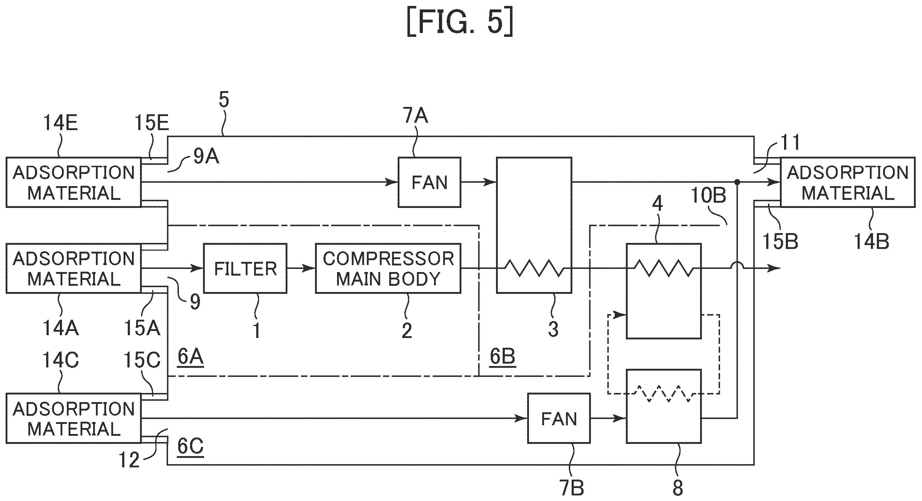

A fourth embodiment of the present invention will be described using FIG. 5. FIG. 5 is a schematic diagram for depicting a configuration of a package type compressor in the present embodiment. It should be noted that in the present embodiment, parts equivalent to those in the first and second embodiments are denoted by the same reference numerals, and descriptions thereof will be omitted as appropriate.

In the compressor of the present embodiment, the opening 10 is not formed in the partition plate disposed between the machine chamber 6A and the machine chamber 6B, and the machine chamber 6A and the machine chamber 6B do not communicate with each other as similar to the second embodiment. The air inlet 9A is formed in the housing 5, and communicates with the machine chamber 6B.

In addition, in the compressor of the present embodiment, the air outlet 11 is not only the first air outlet for discharging the air after being used by the cooler 3, but also serves as the second air outlet for discharging the air after being used by the condenser 8 (that is, the air outlet 13 is not formed in the housing 5). An opening 10B is formed in the partition plate disposed between the machine chamber 6B and the machine chamber 6C, and the machine chamber 6B and the machine chamber 6C communicate with each other through the opening 10B. A flow of air is generated in such a manner that air is taken by the driving of the fan 7B into the machine chamber 6C from the outside of the housing 5 through the air inlet 12, then taken into the machine chamber 6B through the opening 10B, and then discharged to the outside of the housing 5 through the air outlet 11.

The compressor of the present embodiment is not provided with the adsorption material 14D and the holding section 15D described above, but is provided with the adsorption materials 14A, 14B, 14C, and 14E and the holding sections 15A, 15B, 15C, and 15E described above. Therefore, effects similar to those of the first and second embodiments can be obtained.

It should be noted that in the fourth embodiment, an example of a case where the adsorption materials and the holding sections are provided for all of the air inlets 9, 9A, and 12 and the air outlet 11 has been described, but the present invention is not limited to this, and the adsorption material and the holding section may be provided for at least one of the air inlets 9, 9A, and 12 and the air outlet 11.

In addition, although not particularly described in the first to fourth embodiments, the weights of the plurality of adsorption materials may be different from each other. To explain in detail using the first embodiment, the weights of the adsorption materials 14A and 14C are relatively small because they are held on the side of the housing 5, and the weights of the adsorption materials 14B and 14D are relatively large because they are held above the housing 5. Further, in view of the weights of the plurality of adsorption materials and allowable pressure loss, the sparse and dense degrees of the plurality of adsorption materials may be different from each other. To explain in detail using the first embodiment, since the weight of the adsorption material 14A is relatively small and the allowable pressure loss thereof is relatively small, the sparse and dense degree thereof is set to the smallest stage among three stages of the sparse and dense degree (in other words, set to be relatively sparse). Since the weight of the adsorption material 14B is relatively large and the allowable pressure loss thereof is relatively large, the sparse and dense degree thereof is set to the largest stage among three stages of the sparse and dense degree (in other words, set to be relatively dense). Since the weight of the adsorption material 14C is relatively small and the allowable pressure loss thereof is relatively large, the sparse and dense degree thereof is set to the middle stage among three stages of the sparse and dense degree. Since the weight of the adsorption material 14D is relatively large and the allowable pressure loss thereof is relatively large, the sparse and dense degree thereof is set to the largest stage among three stages of the sparse and dense degree (in other words, set to be relatively dense).

In addition, in the first to fourth embodiments, an example of a case where the compressor has at least one of the air inlet 12 and the air outlet 13 together with the dehumidifier 4, the refrigerant compressor, the condenser 8, the capillary tube, and the like has been described, but the present invention is not limited to this, and it is not necessary for the compressor to have the air inlet 12 and the air outlet 13 together with the dehumidifier 4, the refrigerant compressor, the condenser 8, the capillary tube, and the like. That is, the compressor may have the air inlet 9 and the air outlet 13, and may further have the air inlet 9A, and the adsorption material and the holding section may be provided for at least one of them.

In addition, in the first to fourth embodiments, an example of a case where the compressor main body 2 is of a screw type and is provided with a pair of male and female screw rotors, but the present invention is not limited to this. The compressor main body 2 may be provided with, for example, one screw rotor and a plurality of gate rotors. In addition, the compressor main body 2 may be of a type other than the screw type.

## Claims

1. A package type compressor comprising:
a compressor main body that compresses air;
a cooler that cools, by heat exchange with air, compressed air discharged from the compressor main body;
a housing that houses the compressor main body and the cooler;
at least one first air inlet that is formed in the housing and takes in the air before being compressed by the compressor main body and the air before being used by the cooler; and
a first air outlet that is formed in the housing and discharges air after being used by the cooler, wherein
at least one adsorption material for adsorbing carbon dioxide in the air, and
at least one holding section for holding the adsorption material so as to be spaced apart outward with respect to at least one of the first air inlet and the first air outlet are provided.

2. The package type compressor according to claim 1, further comprising:
a dehumidifier that is housed in the housing and further cools and dehumidifies the compressed air cooled by the cooler by heat exchange with a refrigerant;
a condenser that is housed in the housing and configures a refrigeration cycle in which a refrigerant used in the dehumidifier circulates to condense the refrigerant by heat exchange with air;
a second air inlet that is formed in the housing and takes in the air before being used by the condenser; and
a second air outlet that is formed in the housing and discharges air after being used by the condenser, wherein
the holding section holds the adsorption material so as to be spaced apart outward with respect to at least one of the first air inlet, the first air outlet, the second air inlet, and the second air outlet.

3. The package type compressor according to claim 2, wherein
the first air inlet also serves as the second air inlet.

4. The package type compressor according to claim 2, wherein
the first air outlet also serves as the second air outlet.

5. The package type compressor according to at least one of claims 1 to 4, wherein
the holding section has a plurality of rod-shaped members arranged around the first air inlet or the first air outlet while being spaced apart from each other.

6. The package type compressor according to at least one claims 1 to 5, wherein
the adsorption material chemically adsorbs carbon dioxide in the air.
